# EUROPEAN PATENT APPLICATION

(11) **EP 3 882 377 A1**
(43) Date of publication of application: **22.09.2021**
(21) Application number: 20194582.1
(22) Date of filing: 04.09.2020
(51) Int. Cl.: C25B 3/01, C25B 3/03, C25B 3/07, C25B 3/26, C25B 9/19, C25B 11/031, C25B 11/051, C25B 11/054, C25B 11/071

(54) **ELECTRODE CATALYST LAYER FOR CARBON DIOXIDE ELECTROLYSIS CELL, ELECTROLYSIS CELL AND CARBON DIOXIDE ELECTROLYSIS APPARATUS COMPRISING THE SAME**

(30) Priority: 19.03.2020 JP 2020049682
(71) Applicant: KABUSHIKI KAISHA TOSHIBA, Minato-ku Tokyo 105-0023 (JP)
(72) Inventor: Kofuji, Yusuke, Tokyo (JP); Ono, Akihiko, Tokyo (JP); Kudo, Yuki, Tokyo (JP); Kitagawa, Ryota, Tokyo (JP); Motoshige, Asahi, Tokyo (JP); Yamagiwa, Masakazu, Tokyo (JP); Tamura, Jun, Tokyo (JP); Yoshida, Takashi, Tokyo (JP); Mikoshiba, Satoshi, Tokyo (JP)
(74) Representative: Hoffmann Eitle

(57) **Abstract**

The embodiments provide an electrode catalyst layer for reduction of carbon dioxide, a carbon dioxide reduction electrode, and a carbon dioxide electrolysis apparatus. The catalyst layer is made to exhibit high partial current density and to endure a long-term operation by controlling the wettability. The catalyst layer comprises a metallic catalyst supported on carbon material, an ion-conductive material, and a hydrophilic polymer; and is characterized in that a BET specific surface area (A_{N2}) of said catalyst layer determined by nitrogen gas-adsorptionand a BET specific surface area (A_{H2O}) of said catalyst layer determined by water vapor-adsorption are in a ratio (A_{H2O}/A_{N2}) of 0.08 or less.

## Description

### FIELD

Embodiments of the present disclosure relate to an electrode catalyst layer for a carbon dioxide electrolysis cell, also a process for producing the layer, still also an electrode for a carbon dioxide electrolysis cell, yet also a carbon dioxide electrolysis cell comprising the electrode, and further a carbon dioxide electrolysis apparatus comprising the cell.

### BACKGROUND

Recently, from the viewpoints of both energy problems and environmental problems, it has been demanded not only to convert renewable energy such as sunlight into electrical energy for practical use but also to transform the energy into a storable and transportable form. For the purpose of meeting the demand, artificial photosynthesis technology, with which chemical substances are produced by use of sunlight in a manner like photosynthesis of plants, has been progressively researched and developed. This technology opens the possibility of storing renewable energy in the form of storable fuel, and is hoped to produce chemical substances employable as industrial materials and thereby to create values.

As an apparatus for producing chemical substances by use of renewable energy such as sunlight, there is a known electrochemical reaction apparatus comprising, for example, a cathode which reduces carbon dioxide (CO₂) emitted from power plants, waste disposal facilities or the like and an anode which oxidizes water (H₂O). In this apparatus, the cathode reduces carbon dioxide to produce, for example, a carbon compound such as carbon monoxide (CO). When this type of apparatus is realized in the form of a cell (often referred to as "electrolysis cell"), it is thought advantageous to assemble the cell similarly to a fuel cell such as a polymer electric fuel cell (PEFC). Specifically, carbon dioxide is directly supplied to a catalyst layer of the cathode, and thereby it becomes possible to advance smoothly the reduction reaction of carbon dioxide.

However, if being in that cell form, the apparatus has a similar problem to that arising in a PEFC. Specifically, in order to increase the partial current density for the aimed carbon compound, it is necessary to adjust wettability of the cathode catalyst layer so properly that water content can be strictly controlled.

Nevertheless, the cathode catalyst layer used in a PEFC and that in an electrolysis cell for carbon dioxide are quite different in substances diffusing therein and in substrate structure, and accordingly they are also quite different in optimum wettability. In view of that, it is necessary to research a cathode catalyst layer suitable for electrolysis of carbon dioxide.

### BRIEF DESCRIPTION OF THE DRAWINGS

Fig. 1 is a schematic sectional view showing a structure example of a carbon dioxide reduction electrode 100.
Fig. 2 is a schematic sectional view showing a structure example of a carbon dioxide electrolysis apparatus 200.
Fig. 3 is a schematic sectional view showing a structure example of a carbon dioxide electrolysis apparatus 300.
Fig. 4 is a graph showing conversion efficiencies in electrolyses carried out by use of electrodes obtained in Example 1 and Comparative example 1.
Fig. 5 shows results of thermogravimetric analyses of electrode catalysts used in Example 1 and Comparative example 1.

### DETAILED DESCRIPTION

Embodiments will now be explained with reference to the accompanying drawings. Here, it should be noted that the drawings are schematic views and hence, for example, dimensions such as thickness and width of each component are not necessarily the same as real ones. Further, in some embodiments, the same numbers are assigned to essentially the same components and explanations thereof may be omitted.

An electrode catalyst layer for a carbon dioxide electrolysis cell according to the embodiment, comprises
a metallic catalyst supported on carbon material,
an ion-conductive material, and
a hydrophilic polymer;
and is characterized in that
a BET specific surface area (A_{N2}) of said catalyst layer determined by nitrogen gas-adsorption and a BET specific surface area (A_{H2O}) of said catalyst layer determined by water vapor-adsorption are in a ratio (A_{H2O}/A_{N2}) of 0.08 or less.

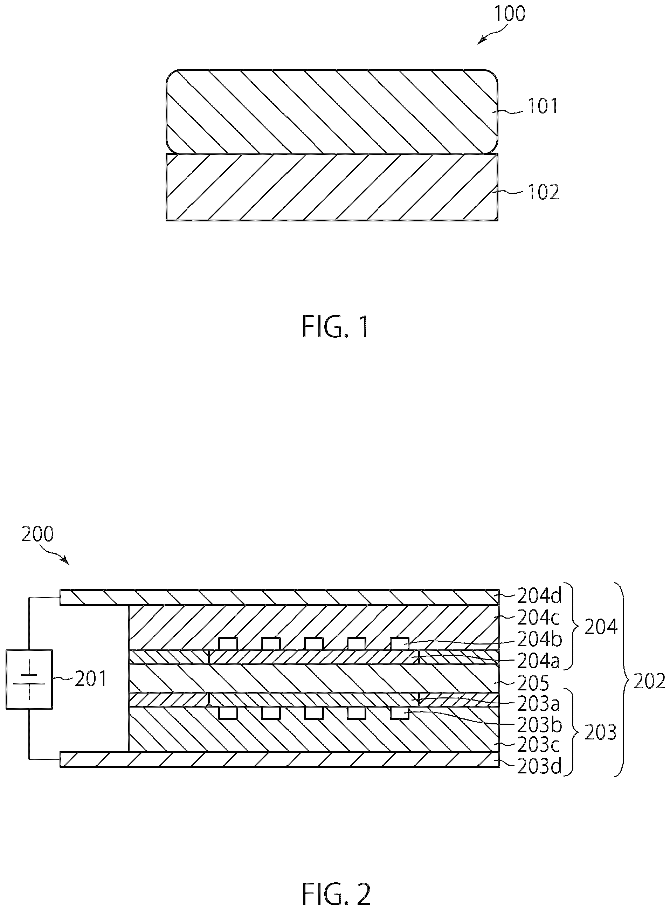

Fig. 1 is a schematic sectional view showing a structure example of a carbon dioxide reduction electrode. The reduction electrode 100 comprises an electrode substrate 102 and a catalyst layer 101 formed thereon according to the embodiment. The catalyst layer of the embodiment comprises carbon material, a metallic catalyst supported thereon, an ion-conductive material, and a hydrophilic polymer; and is characterized by wettability obtained from specific surface areas. Specifically, the layer is characterized in that a BET specific surface area (A_{N2}) determined by nitrogen gas-adsorption and a BET specific surface area (A_{H2O}) determined by water vapor-adsorption are in a ratio (A_{H2O}/A_{N2}) of 0.08 or less. If satisfying the above condition, the electrode provides such high partial current density for the carbon compound as to show high catalyst efficiency.

The following is thought to be the reason why the partial current density is improved when the above ratio A_{H2O}/A_{N2} (hereinafter, often referred to as "wettability") is a low value, that is, when the catalyst layer has water-repellency. The cathode catalyst layer is placed adjacently to a separator contacting with an electrolyte solution, and hence is liable to hold water. The water held therein inhibits diffusion of carbon dioxide gas. However, if the wettability is high enough to ensure water-repellency of the catalyst layer, water held therein tends to be evacuated and hardly stays in the catalyst layer. Accordingly, carbon dioxide gas is not inhibited from diffusing but smoothly supplied onto the catalyst surface. The high catalyst efficiency is thought to be thus realized. In contrast, wettability in conventional fuel cells and the like is beyond the range specified in the embodiment. The reason of that is thought to be as follows. Metallic catalysts are generally obtained by liquid-phase synthesis. When highly active catalysts are synthesized in that way, it is necessary to use hydrophilic polymers. Accordingly, the synthesized catalysts inevitably comprise remaining hydrophilic polymers in relatively large amounts and hence have high wettability. In addition, there has been no knowledge about effect of wettability on catalyst performance, and hence catalysts have been used without controlling their wettability. The present embodiment is realized on the basis of the discovery that catalyst performance can be improved by controlling the wettability and that the wettability in a particular range provides excellent catalyst performance.

In the present embodiment, the catalyst layer has a wettability of 0.08 or less, preferably 0.06 or less, further preferably 0.05 or less. The lower the wettability is, the higher the water-repellency is and hence the more effectively the catalyst layer reduces carbon dioxide.

The above wettability can be obtained by measuring the catalyst layer alone. Before the measurement, the objective catalyst layer may be peeled off from the electrode substrate. Otherwise, only the catalyst layer for measurement may be formed on a smooth support such as a Si support by wet-coating, then peeled off, and thereafter subjected to the measurement. The specific surface areas of powder obtained from the catalyst layer are determined by the gas-adsorption method, specifically, according to JIS Z 8830, in which nitrogen and water vapor are adopted as the adsorbate.

The above wettability depends on the amount of hydrophilic polymer contained in the catalyst layer. As for conventional catalysts, hydrophilic polymers are employed in processes for producing metallic catalysts supported on carbon material. Specifically, the hydrophilic polymers are adopted as protective materials for changing grain sizes of the catalysts synthesized in liquid phase. Further, they are also used as binders of catalyst layers. Accordingly, hydrophilic polymers are generally contained as inevitable ingredients in catalyst layers. Examples of the hydrophilic polymers include polyvinyl alcohol, polyvinylpyrrolidone, methoxypolyethylene oxide methacrylate, polyacrylic acid, polyethyleneimine, polyvinylamine, cyclodextrin and methylcellulose. Conventional catalyst layers comprise those polymers in considerable amounts, and hence have such high hydrophilicity that the wettability is large and the partial current is small.

In view of that, the wettability can be controlled by adjusting the amounts of those polymers contained in the catalyst layer. If the wettability is optimally controlled, it becomes possible to improve efficiency of carbon dioxide reduction. The polymers may be removed either from powder of synthesized catalyst or from the resultant catalyst layer. The hydrophilic polymers can be removed in any desired manner. For example, they can be removed by washing the catalyst layer with an organic solvent. In that case, the organic solvent is preferably acetone, ethanol, methanol, dimethyl sulfoxide, dimethylacetamide, N,N-dimethylformamide, and a mixture thereof. In another way, the catalyst powder may be fired at a high temperature to remove the polymers. If containing an ion-conductive material, the catalyst powder is preferably fired at a temperature of 400°C or less so as not to damage or remove the ion-conductive material. By use of thermogravimetric analysis, it is possible to estimate how much the hydrophilic polymers are contained in the catalyst powder or the catalyst layer. Specifically, the analysis is carried out according to JIS K 0050-2019.

The catalyst carrier preferably has porous structures. Examples of material adoptable as the carrier, other than the above-described ones, include: carbon black, such as, Ketjenblack and VULCAN XC-72; activated carbon; and carbon nanotubes. If having porous structures, the carrier can have large active surfaces contributing to the redox reaction and accordingly can enhance conversion efficiency.

Not only the catalyst carrier but also the catalyst layer in itself formed on the substrate preferably has a porous structure containing many relatively large pores. Specifically, if measured by a mercury injection method, the pore-diameter distribution in the catalyst layer preferably shows the maximum distribution frequency of pores in a diameter range of 5 to 200 µm. When satisfying this condition, the catalyst layer has paths through which the gas diffuses rapidly in the whole catalyst layer and also through which the reduction product is easily evacuated out of the catalyst layer. Consequently, in that case, the electrode is improved in efficiency.

In order to supply carbon dioxide efficiently to the catalyst layer, it is preferred to form a gas diffusion layer on the electrode substrate 102, which supports the catalyst layer. The gas diffusion layer is made of electroconductive porous material. The porous material is preferably water-repellent because water produced by the reduction reaction and/or transferred from the oxidation side can be decreased and drained out through the reduction flow path and consequently the amount of carbon dioxide gas can be relatively increased in the porous material.

It is not preferred for the gas diffusion layer to have an extremely thin thickness because the cell plane deteriorates in evenness. On the other hand, it is also not preferred for the gas diffusion layer to be extremely thick because not only the material cost increases but also the gas diffusion resistance increases to impair the efficiency. For the purpose of further improving the diffusibility, it is more preferred to form a finer diffusion layer (meso-porous layer) between the gas diffusion layer and the catalyst layer because the repellent ability and the porosity can be changed to promote diffusion of the gas and/or evacuation of the liquid.

The metallic catalyst supported on the carrier is, for example, a substance lowering the activation energy for reducing hydrogen ions or carbon dioxide. In other words, the catalyst is, for example, a metallic material that lowers the overvoltage when carbon dioxide is reduced into a carbon compound. Specifically, the catalyst is preferably at least one metal or oxide thereof selected from the group consisting of Au, Ag, Cu, Pt, Pd, Ni, Co, Fe, Mn, Ti, Cd, Zn, In, Ga, Pb, Sn and alloys thereof. However, the catalyst is not limited to those. For example, metal complexes such as Ru complexes and Re complexes can be adopted as a reduction catalyst. Further, plural materials can be mixed to use. The metallic catalyst may be in various forms, such as, planar form, mesh form, wire form, particle form, porous form, film form and island form.

When metal nanoparticles are adopted as the metallic catalyst, the mean diameter thereof is preferably 1 to 15 nm, more preferably 1 to 10 nm, further preferably 1 to 5 nm. The nanoparticles preferably satisfy this condition because the metal surface area per weight of the catalyst is large enough to exhibit high activity.

The metallic catalyst has a weight per area of preferably 0.01 to 5 mg/cm², more preferably 0.01 to 3 mg/cm², further preferably 0.01 to 1 mg/cm². If the catalyst satisfies this condition, the inside of the catalyst layer is water-repellent enough to rapidly drain out water and the product. That is preferred.

The catalyst layer of the embodiment comprises an ion-conductive material, which has a function of carrying or receiving ions among the metallic catalyst particles in the layer. In the layer, the ion-conductive material is hence present in such a form as to cover a part of the metallic catalyst. As the ion-conductive material, cation-exchange resins or anion-exchange resins are preferably adopted. They are polymers having ionic modifying groups. For example, there are known cationic polymers having perfluorosulfonic acid groups. Specifically, examples of usable ion-conductive material include: cation-exchange resins, such as Nafion ([trademark], manufactured by DuPont de Nemours, Inc.) and Flemion ([trademark], manufactured by AGC Inc.); and anion-exchange resins, such as Diaion ([trademark], manufactured by Mitsubishi Chemical Corporation).

The ion-conductive material is contained in a weight per area of preferably 0.01 to 1 mg/cm², more preferably 0.05 to 0.5 mg/cm². If this condition is satisfied, ions are conducted so easily that the effect of the catalyst appears strongly. That is favorable.

The compound produced by the reduction reaction depends on the kind of the metallic catalyst serving as a reduction catalyst. Examples of the compound produced by the reduction reaction include: carbon compounds, such as, carbon monoxide (CO), formic acid (HCOOH), methane (CH₄), methanol (CH₃OH), ethane (C₂H), ethylene (C₂H₄), ethanol (C₂H₅OH), formaldehyde (HCOH) and ethylene glycol; and hydrogen.

Fig. 2 is a schematic sectional view showing a structure example of a carbon dioxide electrolysis apparatus 200 according to a first embodiment. The apparatus employs the above reduction electrode. Specifically, the apparatus shown in Fig. 2 comprises an electric power unit 201 and a cell 202, and the cell comprises an anode unit 203, a cathode unit 204 and a separator 205. The anode unit 203 has an anode 203a, an anode solution-flow path 203b, and an anode current collector 203d. The anode solution-flow path is provided for the purpose of supplying an anode solution to the anode, and is formed of pits (grooves/furrows) carved on a first flow-path plate 203c. Meanwhile, the cathode unit 204 has a carbon dioxide reduction electrode (cathode) 204a equipped with the catalyst layer of the embodiment, a carbon dioxide-flow path 204b, and a cathode current collector 204d. The carbon dioxide-flow path is provided for the purpose of supplying carbon dioxide gas to the cathode, and is formed of pits (grooves/furrows) carved on a second flow-path plate 204c. The separator 205 is so placed as to separate the anode unit and the cathode unit from each other.

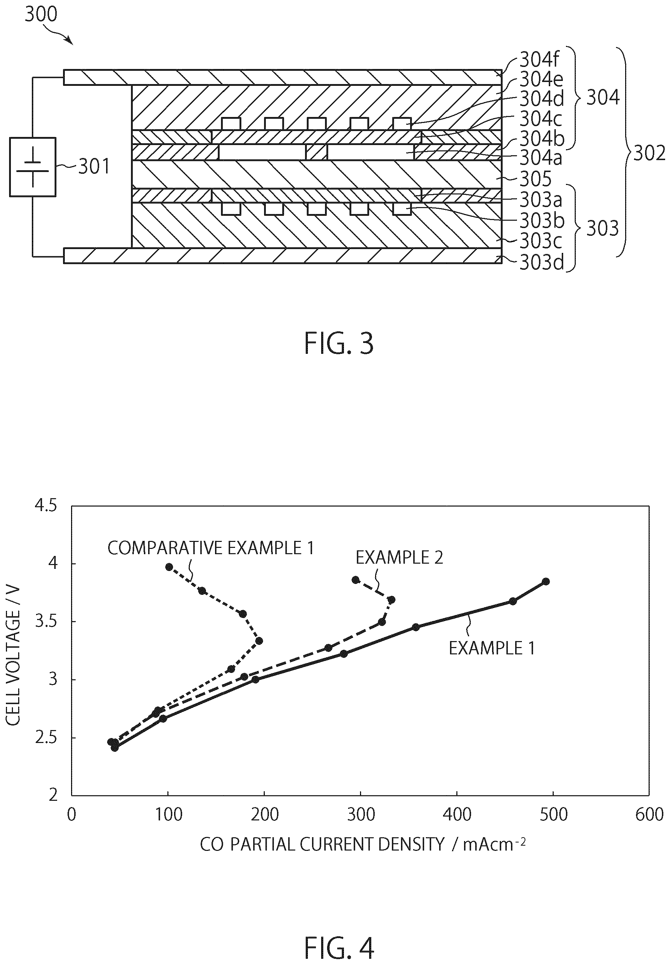

Fig. 3 is a schematic sectional view showing a structure example of a carbon dioxide electrolysis apparatus 300 according to a second embodiment. The apparatus also employs the above reduction electrode. Specifically, the apparatus shown in Fig. 3 comprises an electric power unit 301 and a cell 302, and the cell comprises an anode unit 303, a cathode unit 304 and a separator 305. The anode unit 303 has an anode 303a, an anode solution-flow path 303b, and an anode current collector 303d. The anode solution-flow path is provided for the purpose of supplying an anode solution to the anode, and is formed of pits (grooves/furrows) carved on a first flow-path plate 303c. Meanwhile, the cathode unit 304 has a carbon dioxide reduction electrode 304c equipped with the catalyst layer of the embodiment, a cathode solution-flow path 304a, a carbon dioxide gas-flow path 304d, and a cathode current collector 304f. The carbon dioxide gas-flow path 304d is provided for the purpose of supplying carbon dioxide gas to the cathode, and is formed of pits (grooves/furrows) carved on a second flow-path plate 304e. The cathode solution-flow path 304a is formed of openings carved on a third flow-path plate 304b. The separator 305 is so placed as to separate the anode unit and the cathode unit from each other. The cathode solution-flow path is so placed between the cathode and the separator that the cathode solution can be brought into contact with the cathode and the separator.

In the cathode of the electrolysis cell 200, the anode solution and ions are supplied from the separator while CO₂ gas is supplied through the CO₂ gas-flow path. The CO₂ reduction product is evacuated mainly through the CO₂ gas-flow path. On the other hand, in the cathode of the electrolysis cell 300, the cathode solution and ions are supplied through the cathode solution-flow path while CO₂ gas is supplied through the CO₂ gas-flow path. The gaseous CO₂ reduction product is evacuated mainly through the CO₂ gas-flow path, and the liquid product is evacuated mainly through the cathode solution-flow path. Accordingly, the electrolysis cell 300 is preferably employed when the product is a carbon compound in the form of solution, such as, formic acid (HCOOH), methanol (CH₃OH), ethanol (C₂H₅OH), formaldehyde (HCOH) or ethylene glycol. Those products are dissolved in the cathode solution, and thereby can be easily recovered.

The flow-path plates 203c and 303c, which form anode solution-flow paths, and the flow-path plates 204c and 304c, which form CO₂ gas-flow paths, are preferably made of materials having low chemical reactivity and high electro- conductivity. Examples thereof include: metal materials such as Ti and SUS; and carbon. The third flow-path plate 304b, which forms the cathode solution-flow path, is preferably made of materials having low chemical reactivity and no electro- conductivity. Examples thereof include insulating resin materials such as acrylic resin, polyetherether ketone (PEEK) and fluorine resin.

Each of the electrolysis cells 200 and 300 is generally sandwiched between a pair of support plates (not shown), and tightened with bolts or the like. In Figs. 2 and 3, the reference numerals 201 and 301 indicate electric power units supplying electric currents to the anodes and the cathodes. The electric power units and the electrolysis cells together constitute the carbon dioxide electrolysis apparatuses according to the embodiment. The power units are not limited to normal batteries or commercial power supplies, and may supply electric power generated by renewable energy of solar cells, wind power generation or the like. It is ecologically preferred to use renewable energy in combination with the effective utilization of carbon dioxide.

The anode is an electrode (oxidation electrode) which promotes oxidation reaction of water (H₂O) in the anode solution to produce oxygen (O₂) or hydrogen ions (H⁺) or which promotes oxidation reaction of hydroxy ions (OH⁻) generated in the cathode unit to produce oxygen or water. The anode is so placed between the separator and the anode solution-flow path as to be in contact with them. Specifically, the anode has one face in contact with the separator and the other face in contact with the anode solution-flow path. The first face keeps in close contact with the separator. The first flow-path plate connects to a solution inlet and a solution outlet (which are both not shown), and the anode solution is introduced and evacuated through them, respectively, with a pump (not shown). The anode solution so flows in the anode solution-flow path as to keep in contact with the anode. The anode current collector electrically connects to the first flow-path plate, which forms the anode solution-flow path, on the side opposite to the anode.

The compound produced by the oxidation reaction on the anode depends on the kind of the oxidation catalyst. When an electrolyte aqueous solution is used, the anode can oxidize water (H₂O) into oxygen or hydrogen ions or can oxidize hydroxy ions (OH⁻) into water or oxygen. Accordingly, the anode preferably mainly comprises catalytic material (anode catalyst material) capable of lowering the overvoltage of those reactions. Examples of the catalytic material include: metals, such as, platinum (Pt), palladium (Pd), and nickel (Ni); alloys and intermetallic compounds thereof; binary metal oxides, such as, manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), lithium oxide (Li-O), and lanthanum oxide (La-O); ternary metal oxides, such as, Ni-Co-O, Ni-Fe-O, La-Co-O, Ni-La-O, and Sr-Fe-O; quaternary metal oxides, such as, Pb-Ru-Ir-O and La-Sr-Co-O; and metal complexes, such as, Ru complexes and Fe complexes.

The anode preferably comprises a substrate having a structure through which the anode solution and ions can migrate between the separator and the electrolyte-solution flow path. For example, the substrate has a mesh structure, a punching structure, or a porous-body structure. The substrate having a porous-body structure may be a metal fiber sintered body, which contains relatively large voids. The substrate may be made of metallic material, such as, titanium (Ti), nickel (Ni), iron (Fe) or an alloy (e.g., SUS) containing at least one of them, or of the above-described anode catalyst material. When an oxide is adopted as the anode catalyst material, the anode catalyst material is preferably attached or layered on the substrate made of the above metallic material so as to form the catalyst layer. In view of enhancing the oxidation reaction, the anode catalyst material is preferably in the form of nanoparticles, nanostructures, or nanowires. Here, the "nanostructures" means structures obtained by forming nanoscale surface roughness on the catalyst material. The oxidation catalyst is not necessarily provided on the oxidation electrode. The oxidation catalyst layer may be formed on a place other than the oxidation electrode and electrically connected to the oxidation electrode.

As the anode and cathode solutions, aqueous solutions containing desired electrolytes can be adopted. Examples of the electrolyte-containing aqueous solutions include: aqueous solutions containing phosphate ions (PO₄²⁻), borate ions (BO₃³⁻), sodium ions (Na⁺), potassium ions (K⁺), calcium ions (Ca²⁺), lithium ions (Li⁺), cesium ions (Cs⁺), magnesium ions (Mg²⁺), chloride ions (Cl⁻), or hydrogen carbonate ions (HCO₃⁻). In addition, aqueous solutions containing LiHCO₃, NaHCO₃, KHCO₃, CSHCO₃, phosphoric acid or boric acid are also employable.

Particularly as the cathode solution, it is also possible to use an ionic liquid, which is in the form of liquid in a wide temperature range, comprising a salt of an anion such as BF₄⁻ or PF₆⁻ and a cation such as imidazolium ion or pyridinium ion; or an aqueous solution thereof. In addition, amines, such as ethanolamine, imidazole and pyridine, or aqueous solutions thereof can be employed as the cathode solution. They may be any of primary, secondary, and tertiary amines.

The separator is made of an ion-exchange membrane or the like though which ions can migrate between the anode and the cathode and which can separate the anode unit and the cathode unit from each other. Examples of the ion-exchange membrane include: cation-exchange membranes of Nafion and Flemion, and anion-exchange membranes of Neosepta, Selemion or Sustainion. When an alkali solution is adopted as the electrolyte solution on the assumption that hydroxy ions (OH⁻) mainly migrate therethrough, the separator is preferably made of an anion-exchange membrane. The ion-exchange membrane may be a film comprising a basic skeleton of hydrocarbon or a film having amino groups. However, the separator is not necessarily made of an ion-exchange membrane as long as ions can migrate between the anode and the cathode, and hence salt brides, glass filters, porous polymer films or porous insulating materials, for example, can be adopted as the separator. Here, it should be noted that, if the gas flows between the cathode unit and the anode unit, the reduction product may be again oxidized to cause a circular reaction. In view of that, the gas is preferably hardly exchanged between the cathode unit and the anode unit. Accordingly, attention is needed when a porous thin membrane is used as the separator.

In order to ensure electric contact with the cathode, the carbon dioxide-flow path can be equipped with a land in contact with the cathode. For example, the flow path may be provided with only a columnar land, or may have a serpentine structure in which the path is long, thin, and winding. However, there are no particular restrictions on the structure of the flow path as long as it has a hollow structure. The flow path preferably comprises plural parallel channels, serpentine channels, or a combination thereof because the gas flows so evenly on the cell plane that the reaction can proceed homogeneously on the cell plane.

The flow path preferably has a shallow depth for the purposes of supplying carbon dioxide to the gas-diffusion layer, of draining out the liquids and of making the reaction proceed homogeneously on the cell plane. However, it is not preferred for the flow path to be extremely narrow. That is because the narrow path tends to induce increase of pressure damages in the path. The damages increase energy loss of gas supply, and further cause the gas to leak and flow not only through the path but also through the gas-diffusion layer. As a result, the damages disturb the homogeneous reaction on the cell plane.

The carbon dioxide gas may be supplied in a dry state, but preferably supplied in a moistened state. That is because, even if an ion-exchange membrane is adopted as the separator, the moistened gas can prevent the membrane from drying. The content of carbon dioxide in the supplied gas is not necessarily 100%. Although the efficiency is lowered, it is possible to reduce carbon dioxide-containing gases emitted from various facilities.

The following explains an operation example of the carbon dioxide electrolysis apparatus 200. In the case mainly explained below, carbon monoxide (CO) is produced as the carbon compound. However, the carbon compound as a reduction product from carbon dioxide is not limited to carbon monoxide. As described above, the carbon compound may be methane (CH₄), ethane (C₂H), ethylene (C₂H₄), methanol (CH₃OH), ethanol (C₂H₅OH), ethylene glycol (C₂H₆O₂) or the like. Further, carbon monoxide as a reduction product may be further reduced into the above carbon compound. Also as described above, when the carbon compound is produced in the form of liquid, the electrolysis cell 300 is preferably employed. The reaction process in the electrolysis cell can be thought to be of two types, in one of which hydrogen ions (H⁺) are mainly produced and in the other of which hydroxy ions (OH⁻) are mainly produced. The reaction process is, however, by no means limited to either of them.

First, the reaction process in which water (H₂O) is mainly oxidized to produce hydrogen ions (H⁺) is described below. When the power unit supplies electric currents to between the anode and the cathode, an oxidation reaction of water (H₂O) starts on the anode in contact with the anode solution. Specifically, as shown in the following formula (1), H₂O contained in the anode solution is oxidized into oxygen (O₂) and hydrogen ions (H⁺).

2H₂O --> 4H⁺ + O₂ + 4e⁻ (1)

The hydrogen ions (H⁺) produced on the anode migrate in the electrolyte solution in the anode, penetrate through the separator, and then reach near the cathode. The hydrogen ions (H⁺) thus transferred to near the cathode then participate in the reduction reaction of carbon dioxide (CO₂) together with electrons (e⁻) based on the currents supplied from the power unit. Specifically, as shown in the following formula (2), CO₂ supplied from the CO₂ gas-flow path to the cathode is reduced into CO. Otherwise, as shown in the following formula (3), the hydrogen ions (H⁺) accept electrons to produce hydrogen, which may be generated together with carbon monoxide.

CO₂ + 2H⁺ + 2e⁻ --> CO + H₂O (2)

2H⁺ + 2e⁻ --> H₂ (3)

Next, the reaction process in which carbon dioxide (CO₂) is mainly reduced to produce hydroxy ions (OH⁺) is described below. When the power unit supplies electric currents to between the anode and the cathode, water (H₂O) and carbon dioxide (CO₂) are reduced near the cathode to produce carbon monoxide (CO) and hydroxy ions (OH⁻), as shown in the following formula (4). Otherwise, as shown in the following formula (5), water accepts electrons to produce hydrogen, which may be generated together with carbon monoxide. The hydroxy ions (OH⁻) thus generated in those reactions diffuse to near the anode, and are oxidized as shown in the following formula (6) to produce oxygen (O₂).

2CO₂ + 2H₂O + 4e⁻ --> 2CO + 4OH⁻ (4)

2H₂O + 2e⁻ --> H₂ + 2OH⁻ (5)

4OH⁻ --> 2H₂O + O₂ + 4e⁻ (6)

The above-described carbon dioxide electrolysis apparatus according to the embodiment can be not only specialized in reduction of carbon dioxide but also adopted for producing a reduction product of carbon dioxide and hydrogen in a desired ratio. For example, it can be employed for producing carbon monoxide and hydrogen in a ratio of 1:2, which are then subjected to a reaction for producing methanol.

Since hydrogen is inexpensively and easily available from electrolysis of water or from fossil fuels, the production ratio thereof does not need to be high. In view of that, the ratio of carbon monoxide to hydrogen is at least 1 or more, preferably 1.5 or more from the ecological and economic viewpoints.

### EXAM PLES

### (Example 1)

In accordance with the following procedures, a carbon dioxide electrolysis apparatus shown in Fig. 2 was assembled.

The cathode catalyst layer was formed by spray-coating. The adopted electrode substrate was a sheet of carbon paper having a diffusion layer equipped with a microporous layer. First, metallic catalyst, pure water, isopropanol and a Nafion solution were mixed in a predetermined ratio to prepare a coating solution. As the metallic catalyst, carbon particles supported with gold nanoparticles were employed. This metallic catalyst was beforehand treated to reduce the content of hydrophilic polymer. The coating solution was held in a spray-nozzle, and sprayed onto the carbon paper spread on a heated hot-plate to carry out the spray-coating. The resultant paper was cut into a 2 x 2 cm piece to produce a cathode (electrode area: 4 cm²). Only the formed catalyst layer was peeled off and subjected to BET specific surface area measurements in which nitrogen and water vapor were adopted as the adsorbate. As a result, the wettability was found to be 0.05.

The adopted anode was an electrode formed by coating a Ti mesh sheet with IrO₂ nanoparticles serving as the catalyst. The IrO₂/Ti mesh sheet was then cut into a 2 x 2 cm piece to produce an anode.

Subsequently, the electrolysis cell was produced by: stacking, in the order from the top, a cathode current collector, a carbon dioxide gas-flow path, the cathode, a separator, the anode, an electrolyte-solution flow path, and an anode current collector; then sandwiching the stack between support plates not shown; and subsequently tightening the stack with bolts. As the separator, an anion-exchange membrane (Sustainion [trademark], manufactured by Dioxide Materials) was adopted. The anode and cathode current collectors were connected to an external power supply unit. In this way, the electrolysis apparatus shown in Fig. 2 was assembled.

The electrolysis apparatus shown in Fig. 2 was operated under the following conditions. While the carbon dioxide gas-flow path was supplied with carbon dioxide in a predetermined amount, an aqueous solution of sodium hydrogen carbonate (concentration: 0.1 M) was led to flow in the electrolyte-solution flow path. Meanwhile, a constant current of 12.5, 50, 100, 200, 300, 400, 500, or 600 mAcm⁻² was individually applied continuously to between the anode and the cathode for 10 minutes. The gas generated from the cathode side was collected 5 minutes after each current was applied, to measure the conversion efficiency of carbon dioxide. Further, the generated gas was sampled, then assigned and quantified by means of gas-chromatography. In this procedure, the voltage and the partial current densities of generated hydrogen and carbon monoxide were individually measured. As the result of the above operation, hydrogen and carbon monoxide were produced and the total of the partial current densities thereof were found to be almost corresponding to the above current density. Fig. 4 shows a graph in which the voltage is plotted against the partial current density of carbon monoxide. The maximum partial current density was found to be 490 mAcm⁻² under those conditions.

### (Example 2)

The procedures of Example 1 were repeated except for changing the condition of washing with an organic solvent to prepare a catalyst layer having a wettability of 0.06. The evaluation was carried out in the same manner as in Example 1. As a result, the maximum partial current density was found to be 340 mAcm⁻².

### (Comparative example 1)

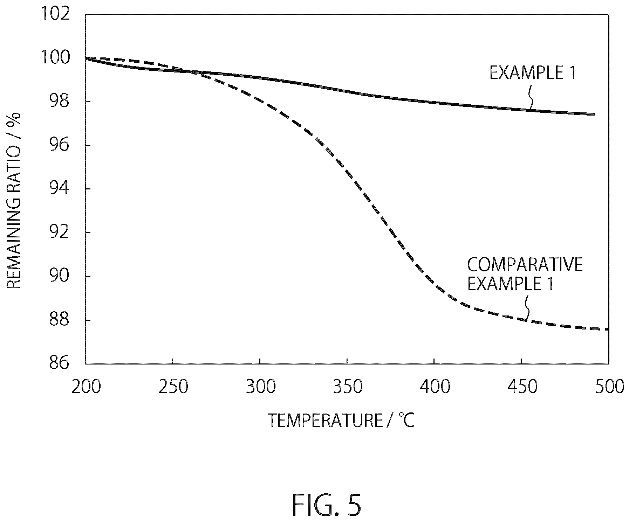

A catalyst layer having a wettability different from that in Example 1 was prepared. Specifically, metallic catalyst containing hydrophilic polymer in an amount different from that in Example 1 was adopted. Fig. 5 shows results of thermogravimetric analysis. As compared with the metallic catalyst used in Example 1, that in Comparative example 1 significantly reduced the weight when the temperature was increased to 450°C. This indicates that the metallic catalyst used in Comparative example 1 contained hydrophilic polymer in a large amount. By using that metallic catalyst, a catalyst layer was formed in the same manner as in Example 1 to produce an electrode. The supported amount of gold and the mean particle size of gold nanoparticles were adjusted to be almost the same as those in Example 1. Only the formed catalyst layer was peeled off and subjected to BET specific surface area measurements in which nitrogen and water vapor were adopted as the adsorbate. As a result, the wettability was found to be 0.09.

Subsequently, the procedures of Example 1 were repeated except for using the above prepared cathode, to assemble an electrolysis apparatus shown in Fig. 2. The electrolysis apparatus was then operated under the same conditions as in Example 1. Fig. 4 shows the results. The maximum partial current density was found to be 295 mAcm⁻², which is inferior to that in Example 1. From the results, the catalyst layer in Example 1 is presumed to contain hydrophilic polymer in such a reduced amount that the wettability was lowered enough to improve the current density.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fail within the scope and sprit of the invention.

## Claims

1. An electrode catalyst layer for a carbon dioxide electrolysis cell, comprising
a metallic catalyst supported on carbon material,
an ion-conductive material, and
a hydrophilic polymer;
**characterized in that**
a BET specific surface area (A_{N2}) of said catalyst layer determined by nitrogen gas-adsorption and a BET specific surface area (A_{H2O}) of said catalyst layer determined by water vapor-adsorption are in a ratio (A_{H2O}/A_{N2}) of 0.08 or less.

2. The catalyst layer according to claim 1, wherein said hydrophilic polymer is selected from the group consisting of polyvinyl alcohol, polyvinylpyrrolidone, methoxypolyethylene oxide methacrylate, polyacrylic acid, polyethyleneimine, polyvinylamine, cyclodextrin and methylcellulose.

3. The catalyst layer according to claim 1 or 2, having a thickness of 5 to 200 µm.

4. The catalyst layer according to any one of claims 1 to 3, wherein a pore-diameter distribution measured by a mercury injection method shows the highest peak of frequency distribution in the diameter range of 5 to 200 µm provided that the diameter and the logarithmic differential pore volume are plotted on the horizontal and vertical axes, respectively.

5. The catalyst layer according to any one of claims 1 to 4, wherein said carbon material are at least one selected from the group consisting of carbon particles, carbon nanotubes and graphenes.

6. The catalyst layer according to any one of claims 1 to 5, wherein said metallic catalyst is at least one metal or oxide thereof selected from the group consisting of Au, Ag, Cu, Pt, Pd, Ni, Co, Fe, Mn, Ti, Cd, Zn, In, Ga, Pb and Sn, and said metallic catalyst also has at least one structure selected from the group consisting of nanoparticles, nanostructures and nanowires.

7. The catalyst layer according to claim 6, wherein said nanoparticles have a mean diameter of 1 to 15 nm.

8. The catalyst layer according to any one of claims 1 to 7, wherein said metallic catalyst has a weight per unit area of said catalyst layer in a range of 0.01 to 5 mg/cm².

9. The catalyst layer according to any one of claims 1 to 8, wherein said ion-conductive material is a cation-exchange resin or an anion-exchange resin.

10. A producing process of an electrode catalyst layer for a carbon dioxide electrolysis cell, comprising;
applying and drying, on a substrate, a composition comprising a metallic catalyst supported on carbon material, an ion-conductive material, and a hydrophilic polymer; **characterized by** further comprising:
reducing the content of said hydrophilic polymer contained in said composition by extraction with an organic solvent, or
reducing the content of said hydrophilic polymer after application of said composition by firing the formed composition layer at a high temperature.

11. The process according to claim 10, wherein said organic solvent is at least one selected from the group consisting of acetone, ethanol, methanol, dimethyl sulfoxide, dimethylacetamide, N,N-dimethylformamide, and a mixture thereof.

12. The process according to claim 10 or 11, wherein the conditions of said firing at a high temperature include heating said composition layer at 400°C or less.

13. An electrode for a carbon dioxide electrolysis cell, in which the catalyst layer according to any one of claims 1 to 9 is formed on an electrode substrate.

14. A carbon dioxide electrolysis cell comprising:
an anode unit having an anode which oxidizes water or hydroxy ions into oxygen, and an anode solution-flow path through which an anode solution is supplied to said anode;
a cathode unit having a cathode which is equipped with the electrode according claim 13 and which reduces carbon dioxide into a carbon compound, and a gas-flow path through which carbon dioxide is supplied to said cathode; and
a separator separating said anode unit and said cathode unit from each other.

15. A carbon dioxide electrolysis cell comprising:
an anode unit having an anode which oxidizes water or hydroxy ions into oxygen, and an anode solution-flow path through which an anode solution is supplied to said anode;
a cathode unit having a cathode which is equipped with the electrode according to claim 13 and which reduces carbon dioxide into a carbon compound, a cathode solution-flow path through which a cathode solution is supplied to said cathode, and a gas-flow path through which carbon dioxide is supplied to said cathode; and
a separator separating said anode unit and said cathode unit from each other;
provided that
said anode has a first face keeping in contact with said separator and a second face fronting on said anode solution-flow path so that said anode solution can keep in contact with said anode.

16. The electrolysis cell according to claim 15, wherein said cathode has a first face fronting on said cathode solution-flow path and a second face fronting on said gas-flow path, and said cathode solution-flow path is so placed between said separator and said cathode that said cathode solution can keep in contact with both said separator and said cathode.

17. The electrolysis cell according to claim 14, wherein
said anode comprises a substrate of at least one selected from the group consisting of mesh material, punching material, porous material, and metal fiber sintered material, and further
said anode comprises said substrate which contains anode catalyst or comprises a catalyst layer which contains anode catalyst and which is formed on the surface of said substrate.

18. The electrolysis cell according to claim 17, wherein
said substrate comprises a metal material containing at least one metal selected from the group consisting of Ti, Ni and Fe, and
said anode catalyst comprises a metal material containing at least one metal selected from the group consisting Ni, Fe, Co, Mn, La, Ru, Li, Ir, In, Sn, and Ti, or comprises a metal oxide material containing said metal.

19. The electrolysis cell according to claim 15 or 16, wherein said anode and cathode solutions comprise at least one ion selected from the group consisting of hydroxy ion, hydrogen ion, potassium ion, sodium ion, lithium ion, chloride ion, bromide ion, iodide ion, nitrate ion, sulfate ion, phosphate ion, borate ion, and hydrogen carbonate ion.

20. The electrolysis cell according to claim 14, wherein said separator is at least one selected from the group consisting of a cation exchange membrane, an anion exchange membrane, and a porous membrane.

21. The electrolysis cell according to claim 14, wherein said carbon compound produced by reduction of said carbon dioxide contains at least one selected from the group consisting of methane, ethane, ethylene, methanol, ethanol, and ethylene glycol.

22. A carbon dioxide electrolysis apparatus comprising: the electrolysis cell according to claim 14, and an electric power unit supplying electric currents to between said anode and said cathode in said electrolysis cell.
